(19) **Europäisches Patentamt European Patent Office Office européen des brevets**

(11) **EP 3 002 904 A1**

(12) **EUROPEAN PATENT APPLICATION**

(43) Date of publication:
06.04.2016 Bulletin 2016/14

(51) Int Cl.:
*H04L 9/00* (2006.01) *H04L 9/30* (2006.01)

(21) Application number: 14306547.2

(22) Date of filing: 01.10.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Heen, Olivier**
**35576 Cesson Sevigne (FR)**
• **Joye, Marc**
**35576 Cesson Sevigne (FR)**
• **Le Scouarnec, Nicolas**
**35576 Cesson Sevigne (FR)**
• **Libert, Benoit**
**35576 Cesson Sevigne (FR)**
• **Neumann, Christophe**
**35576 Cesson Sevigne (FR)**

(74) Representative: **Huchet, Anne**
**Technicolor**
**1-5 rue Jeanne d'Arc**
**92130 Issy-Les-Moulineaux (FR)**

(54) **Method for ciphering/deciphering and processing vectors of dimension n, where n is an integer greater or equal to 1**

(57) In one embodiment, it is proposed a method for ciphering a plaintext vector $\vec{x}$ of dimension $n \geq 1$, $\vec{x} = (x_1, \dots, x_n) \in \mathbb{Z}_N^n$, where N is an integer. The method is executed by an electronic device, and is remarkable in that it comprises:

- obtaining a binary random data, $tag \in \{0,1\}^*$, being a tag associated to said plaintext vector;

- obtaining a secret key $SK = (p_1, p_2, g_{p_1}, g_{p_2}, \{s_i\}_{i=1}^n, K)$, where $p_1, p_2$ are prime numbers, with $N = p_1 p_2$, $\{s_i\}_{i=1}^n$ is a set of random integers $s_1, \dots, s_n \in \mathbb{Z}_{p_2}^n$ subject to the constraint $\sum_{i=1}^n s_i^2 = 0 \bmod p_2$, $g_{p_1}$ is a random element that belongs to a group $\mathbb{G}_{p_1}$ having an order $p_1$, $g_{p_2}$ is a random element that belongs to a group $\mathbb{G}_{p_2}$ having an order $p_2$, and K is a secret key which defines a pseudo-random function $F_K(.)$ defined over a message space

$$\mathcal{M} = \{0,1\}^* \times \{1, \dots, n\};$$

- obtaining elements $t_i = F_K(tag, i) \in \mathbb{Z}_{p_1}$ with $(tag, i) \in \mathcal{M}$ for all integer value i from 1 to n;

- obtaining an element $\delta$ that is chosen randomly in the group $\mathbb{Z}_{p_1}$;

- obtaining elements $C_i = g_{p_1}^{x_i + t_i} \cdot g_{p_2}^{\delta.s_i} \in \mathbb{G}$ for all integer value i from 1 to n, where $\mathbb{G}$ is a group of order N;

- delivering a ciphertext vector $\vec{C}$ of said plaintext vector $\vec{x}$ corresponding to a vector $\vec{C} = (C_1, \dots, C_n) \in \mathbb{G}^n$.

**Description**

Technical Field

The invention relates to cryptography, and more specifically, to privacy preserving techniques.

Background

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Processing on encrypted data in such way that the privacy is preserved is a hectic research subject. Indeed, on one side, users do not want that service providers can access some of their personal data, but on the other side, service providers want to be able to obtain relevant information (such as geographic location, etc.) in order to propose more accurate ads or statistics on the behavior of their users. In order to satisfy these requirements from both the users and the service providers, several techniques have been recently proposed. In the article entitled "Location Privacy via Private Proximity Testing" by A. Narayanan et al., published in the proceedings of the conference NDSS 2011, some privacy-preserving tests for proximity are described. Such techniques enable a first user's device to know (in the sense have access to the information) if it is close to a second user's device (that is used by a friend) without either party revealing any other information about their location. These techniques can also be modified in order to construct other types of privacy-preserving functionalities such as location based advertising, location statistics, location based meeting, etc.

However, one drawback of these techniques is that they are interactive, in the sense that some interactions (i.e. communication exchanges) must be performed. More, they are asymmetric in the sense that if the first user's device knows if it is close to a second user's device, the second user's device does not know if it is close to the first user's device.

The article entitled "Property Preserving Symmetric Encryption" by O. Pandey et al., published in the proceedings of the conference Eurocrypt 2012, described some encryption schemes that allow public computation of a pre-specified property P (modeled by Boolean functions) about encrypted data. More precisely, these schemes comprise a dedicated method that is a publicly computable polynomial time algorithm that operates on ciphertexts (or encrypted data), that checks if the pre-specified property P is satisfied on the underlying messages of the input ciphertexts (i.e. the plaintexts). Such techniques do not involve interactions as in the previous mentioned technique. However, these schemes allow only encrypting vectors in such a way that anyone can publicly test whether two encrypted vectors are orthogonal without learning any further information.

The proposed technique is a modification of the techniques described in the article entitled *"Property Preserving Symmetric Encryption"* that can be used in the context of geographical distance evaluation as specified in the article *"Location Privacy via Private Proximity Testing"*.

Therefore, the technique of the article entitled *"Property Preserving Symmetric Encryption"* needs to be modified in order to evaluate distances rather than testing orthogonality. However, no hints to obtain such property are disclosed on the previous mentioned articles.

Summary of the invention

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present invention is directed to a method for ciphering a plaintext vector $\vec{x}$ of dimension $n \geq 1$, $\vec{x} = (x_1, \dots, x_n)$

$\in \mathbb{Z}_N^n$, where $N$ is an integer. The method is executed by an electronic device, and is remarkable in that it comprises:

- obtaining a binary random data, $tag \in \{0,1\}^*$, being a tag associated with said plaintext vector;

- obtaining a secret key $SK = (p_1, p_2, g_{p_1}, g_{p_2}, \{s_i\}_{i=1}^n, K)$, where $p_1, p_2$ are prime numbers, with $N = p_1 p_2$,

$\{s_i\}_{i=1}^n$ is a set of random integers $s_1, ..., s_n \in \mathbb{Z}_{p_2}^n$ subject to the constraint $\sum_{i=1}^n s_i^2 = 0 \bmod p_2$, $g_{p1}$ is a random element that belongs to a group $\mathbb{G}_{p_1}$ having an order $p_1$, $g_{p2}$ is a random element that belongs to a group $\mathbb{G}_{p_2}$ having an order $p_2$, and K is a secret key which defines a pseudo-random function $F_K(.)$ defined over a message space $M = \{0,1\}^* \times \{1, ..., n\}$;

- obtaining elements $t_i = F_K(tag, i) \in \mathbb{Z}_{p_1}$ with $(tag, i) \in M$ for all integer values $i$ from 1 to n;

- obtaining an element $\delta$ that is chosen randomly in the group $\mathbb{Z}_{p_1}$;

- obtaining elements $C_i = g_{p_1}^{x_i + t_i} \cdot g_{p_2}^{\delta.s_i} \in \mathbb{G}$ for all integer values $i$ from 1 to $n$, where $\mathbb{G}$ is a group of order $N$;

- delivering a ciphertext vector $\vec{C}$ of said plaintext vector $\vec{x}$ corresponding to a vector $\vec{C} = (C_1, ..., C_n) \in \mathbb{G}^n$.

In a preferred embodiment, the components $x_1,...,x_n$ of said plaintext vector correspond to geographic information.

In a preferred embodiment, the dimension $n$ is equal to two, and the components $x_1, x_2$ correspond respectively to a latitude and a longitude related information that are mapped onto $\mathbb{Z}_N$.

In a preferred embodiment, the dimension n is equal to three, and the components $x_1, x_2, x_3$ correspond respectively to a latitude, a longitude and an altitude related information that are mapped onto $\mathbb{Z}_N$.

In a preferred embodiment, the pseudo-random function $F_K(.)$ is based on a cryptographically secure pseudo-random number generator.

In a preferred embodiment, the cryptographically secure pseudorandom number generator is one element belonging to a list comprising:

- Fortuna algorithm;
- Yarrow algorithm;
- cryptographically secure pseudorandom number generator defined in ANSI X9.17 standard or FIPS 186-2 standard or NIST SP 800-90A standard.

In a preferred embodiment, the binary random data *tag* has a size of 32 bits.
In a preferred embodiment, the binary random data *tag* has a size of 64 bits.
In a preferred embodiment, the prime number $p_2$ verifies a congruence relationship $p_2 \equiv 1 \pmod 4$.
In a preferred embodiment, it is proposed a method for deciphering a ciphertext vector $\vec{C}$ of dimension $n \geq 1$, $\vec{C} = (C_1, ..., C_n) \in \mathbb{G}^n$, where $\mathbb{G}$ is a group of order $N$. The method is executed by an electronic device, and is remarkable in that it comprises:

- obtaining binary random data, $tag \in \{0,1\}^*$, being a tag associated with a plaintext vector associated with said ciphertext vector $\vec{C}$;

- obtaining a part of a secret key $SK$, said part comprising elements $(p_2, g_{p_1}, K)$, where $p_2$ is a prime number, $g_{p_1}$ is a random element that belongs to a group $\mathbb{G}_{p_1}$ having an order $p_1$, where $p_1$ is a prime number, and $K$ is a secret key which defines a pseudo-random function $F_K(.)$ defined over a message space $M = \{0,1\}^* \times \{1, ... , n\}$;

- obtaining elements $t_i = F_K(tag, i) \in \mathbb{Z}_{p_1}$ for the message $(tag, i) \in$ for all integer values $i$ from 1 to $n$;

- obtaining elements $D_{i,p_1} = C_i^{p_2} \cdot g_{p_1}^{-t_i p_2}$ for all integer values $i$ from 1 to $n$;

- obtaining discrete logarithm $x_i \in \mathbb{Z}_N$ of $D_{i,p_1}$ for the base $g_{p_1}^{p_2}$ for all integer values $i$ from 1 to $n$;

- delivering a plaintext vector $\vec{x}$ associated with said ciphertext vector $\vec{C}$ corresponding to a vector $\vec{x} = (x_1, ..., x_n) \in \mathbb{Z}_N^n$.

In a preferred embodiment, the components $x_1, ... , x_n$ of said plaintext vector, in the method for deciphering, correspond to geographic information.
In a preferred embodiment, it is proposed a method for processing at least two ciphertext vectors $\vec{C_1}$ and $\vec{C_2}$,

each ciphertext vector being of dimension $n \geq 1$, $\overrightarrow{C_1} = \left( C_1^{(1)}, \ldots, C_n^{(1)} \right) \in \mathbb{G}^n$ and $\overrightarrow{C_2} = \left( C_1^{(2)}, \ldots, C_n^{(2)} \right) \in \mathbb{G}^n$,

where $\mathbb{G}$ is a group being a component of a bilinear group $(\mathbb{G}, \mathbb{G}_T)$ of order $N$, the method being executed by an electronic device, and being characterized in that it comprises:

- obtaining a binary random data, $tag \in \{0,1\}^*$, being a tag associated with both plaintext vectors associated with said ciphertext vectors $\overrightarrow{C_1}$ and $\overrightarrow{C_2}$;
- obtaining elements $D_i = C_i^{(1)}/C_i^{(2)}$ for all integer values $i$ from 1 to $n$;
- obtaining a value $T = \prod_{i=1}^n e(D_i, D_i)$, where $e$ is a bilinear map $e \colon \mathbb{G} \times \mathbb{G} \to \mathbb{G}_T$;
- obtaining a discrete logarithm $\omega \in \mathbb{Z}$ of $T \in \mathbb{G}_T$ with respect to an obtained base $e(g_{p_1}, g_{p_1})$;
- delivering an output that is a function of said discrete logarithm $\omega$.

In a preferred embodiment, the output corresponds to an Euclidian distance between at least two plaintext vectors associated with said at least two ciphertext vectors.

In a preferred embodiment, the at least two plaintext vectors correspond to geographic information.

In a preferred embodiment, the at least two plaintext vectors correspond to images fingerprint information.

One skilled in the art could use for example the technique described in the article "A New Fingerprinting method for digital images" by V. Fotopoulos and A.N. Skodras in order to obtain such image fingerprint information. In another embodiment, video fingerprinting information instead of image fingerprint information are used. In another embodiment, an image fingerprint information or a video fingerprinting information is a list of features that are rated by a user. For example, for an identified movie/video, a user rates several features as the length of the film (long, too long, too short, etc., and a corresponding number is associated with this rating), the plot (good, interesting, etc. and a corresponding number is associated with this rating), etc.

In a preferred embodiment, the method is implemented in a collaborative filtering system.

Indeed, the present technique can be used in a collaborative filtering system, as the ones depicted in the article "Fingerprinting Ratings For Collaborative Filtering - Theoretical and Empirical Analysis" by Y. Bachrach and R. Herbrich, for providing recommendations in such a way that a device executing such a method cannot reveal the image fingerprint information. Hence, by using such method we can set up a recommendation system that has privacy preserving properties.

According to an exemplary implementation, the different steps of the method are implemented by a computer software program or programs, this software program comprising software instructions designed to be executed by a data processor of a relay module according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory"*), for example a CD-ROM (which stands for *"Compact Disc - Read Only Memory"*) or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more sub-programs of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc.

Let's also remark that a step of obtaining an element/value in the present document can be viewed either as a step of reading such element/value in a memory unit of an electronic device or a step of receiving such element/value from another electronic device via communication means.

In another embodiment, it is proposed an electronic device configured to cipher a plaintext vector $\vec{x}$ of dimension $n \geq 1$, $\vec{x} = (x_1, \ldots, x_n) \in \mathbb{Z}_N^n$, where $N$ is an integer. Such electronic device comprises:

- means for obtaining a binary random data, $tag \in \{0,1\}^*$, being a tag associated with said plaintext vector;

- means for obtaining a secret key $SK = (p_1, p_2, g_{p_1}, g_{p_2}, \{s_i\}_{i=1}^n, K)$, where $p_1, p_2$ are prime numbers, with $N = p_1 p_2$, $\{s_i\}_{i=1}^n$ is a set of random integers $s_1, \ldots, s_n \in \mathbb{Z}_{p_2}^n$ subject to the constraint $\sum_{i=1}^n s_i^2 = 0 \bmod p_2$, $g_{p_1}$ is a random element that belongs to a group $\mathbb{G}_{p_1}$ having an order $p_1$, $g_{p_2}$ is a random element that belongs to a group $\mathbb{G}_{p_2}$ having an order $p_2$, and K is a secret key which defines a pseudo-random function $F_K(.)$ defined over a message space $M = \{0,1\}^* \times \{1, \ldots, n\}$;

- means for obtaining elements $t_i = F_K(tag, i) \in \mathbb{Z}_{p_1}$ with $(tag, i) \in M$ for all integer values $i$ from 1 to $n$;

- means for obtaining an element $\delta$ that is chosen randomly in the group $\mathbb{Z}_{p_1}$;

- means for obtaining elements $C_i = g_{p_1}^{x_i + t_i} . g_{p_2}^{\delta.s_i} \in \mathbb{G}$ for all integer values $i$ from 1 to n, where $\mathbb{G}$ is a group of order $N$;

- means for delivering a ciphertext vector $\vec{C}$ of said plaintext vector $\vec{x}$ corresponding to a vector $\vec{C} = (C_1, \ldots, C_n) \in \mathbb{G}^n$.

In another embodiment, it is proposed an electronic device configured to decipher a ciphertext vector $\vec{C}$ of dimension $n \geq 1$, $\vec{C} = (C_1, \ldots, C_n) \in \mathbb{G}^n$, where $\mathbb{G}$ is a group of order $N$. The electronic device comprises:

- means for obtaining a binary random data, $tag \in \{0,1\}^*$, being a tag associated with a plaintext vector associated to said ciphertext vector $\overline{C}$;

- means for obtaining a part of a secret key $SK$, said part comprising elements $(p_2, g_{p_1}, K)$, where $p_2$ is a prime number, $g_{p_1}$ is a random element that belongs to a group $\mathbb{G}_{p_1}$ having an order $p_1$, where $p_1$ is a prime number, and K is a secret key which defines a pseudo-random function $F_K(.)$ defined over a message space $M = \{0,1\}^* \times \{1, \ldots, n\}$;

- means for obtaining elements $t_i = F_K(tag, i) \in \mathbb{Z}_{p_1}$ for the message $(tag, i) \in$ for all integer values $i$ from 1 to $n$;

- means for obtaining elements $D_{i,p_1} = C_i^{p_2} . g_{p_1}^{-t_i p_2}$ for all integer values $i$ from 1 to $n$;

- means for obtaining discrete logarithm $x_i \in \mathbb{Z}_N$ of $D_{i,p_1}$ for the base $g_{p_1}^{p_2}$ for all integer values $i$ from 1 to $n$;

- means for delivering a plaintext vector x associated to said ciphertext vector $\vec{C}$ corresponding to a vector $\vec{x} = (x_1, \ldots, x_n) \in \mathbb{Z}_N^n$.

In another embodiment, it is proposed an electronic device being able to process at least two ciphertext vectors $\vec{C_1}$ and $\vec{C_2}$, each ciphertext vector being of dimension $n \geq 1$, $\vec{C_1} = (C_1^{(1)}, \ldots, C_n^{(1)}) \in \mathbb{G}^n$ and $\vec{C_2} = (C_1^{(2)}, \ldots, C_n^{(2)}) \in \mathbb{G}^n$, where $\mathbb{G}$ is a group being a component of a bilinear group $(\mathbb{G}, \mathbb{G}_T)$ of order $N$.

The electronic device comprises:

- means for obtaining a binary random data, *tag* $\in$ {0,1}*, being a tag associated with both plaintext vectors associated to said ciphertext vectors $\vec{C_1}$ and $\vec{C_2}$;
- means for obtaining elements $D_i = C_i^{(1)}/C_i^{(2)}$ for all integer values *i* from 1 to *n*;
- means for obtaining a value $T = \prod_{i=1}^{n} e(D_i, D_i)$, where *e* is a bilinear map $e: \mathbb{G} \times \mathbb{G} \to \mathbb{G}_T$;
- means for obtaining a discrete logarithm $\omega \in \mathbb{Z}$ of $T \in \mathbb{G}_T$ with respect to an obtained base $e(g_{p_1}, g_{p_1})$;
- means for delivering an output that is a function of said discrete logarithm $\omega$.

In another embodiment, it is proposed an electronic device being able to cipher a plaintext vector $\vec{x}$ of dimension $n \geq 1$, $\vec{x} = (x_1, \dots, x_n) \in \mathbb{Z}_N^n$, where *N* is an integer. Such electronic device comprises:

- a module configured to obtain a binary random data, *tag* $\in$ {0,1}*, being a tag associated to said plaintext vector;
- a module configured to obtain a secret key $SK = (p_1, p_2, g_{p_1}, g_{p_2}, \{s_i\}_{i=1}^n, K)$, where $p_1, p_2$ are prime numbers, with $N = p_1 p_2$, $\{s_i\}_{i=1}^n$ is a set of random integers $s_1, \dots, s_n \in \mathbb{Z}_{p_2}^n$ subject to the constraint $\sum_{i=1}^n s_i^2 = 0 \bmod p_2$, $g_{p1}$ is a random element that belongs to a group $\mathbb{G}_{p_1}$ having an order $p_1$, $g_{p2}$ is a random element that belongs to a group $\mathbb{G}_{p_2}$ having an order $p_2$, and *K* is a secret key which defines a pseudo-random function $F_K(.)$ defined over a message space $M = \{0,1\}^* \times \{1, \dots, n\}$;
- a module configured to obtain elements $t_i = F_K(tag, i) \in \mathbb{Z}_{p_1}$ with $(tag, i) \in M$ for all integer value *i* from 1 to *n*;
- a module configured to obtain an element $\delta$ that is chosen randomly in the group $\mathbb{Z}_{p_1}$;
- a module configured to obtain elements $C_i = g_{p_1}^{x_i+t_i} \cdot g_{p_2}^{\delta.s_i} \in \mathbb{G}$ for all integer value *i* from 1 to *n*, where $\mathbb{G}$ is a group of order *N*;
- a module configured to deliver a ciphertext vector $\vec{C}$ of said plaintext vector $\vec{x}$ corresponding to a vector $\vec{C} = (C_1, \dots, C_n) \in \mathbb{G}^n$.

In another embodiment, it is proposed an electronic device being able to decipher a ciphertext vector $\vec{C}$ of dimension $n \geq 1$, $\vec{C} = (C_1, \dots, C_n) \in \mathbb{G}^n$, where $\mathbb{G}$ is a group of order *N*. Such electronic device is remarkable in that it comprises:

- a module configured to obtain a binary random data, *tag* $\in$ {0,1}*, being a tag associated to a plaintext vector associated to said ciphertext vector $\vec{C}$;
- a module configured to obtain a part of a secret key *SK*, said part comprising elements ($p_2, g_{p1}, K$), where $p_2$ is a prime number, $g_{p_1}$ is a random element that belongs to a group $\mathbb{G}_{p_1}$ having an order $p_1$, where $p_1$ is a prime number, and *K* is a secret key which defines a pseudo-random function $F_K(.)$ defined over a message space $M = \{0,1\}^* \times \{1, \dots, n\}$;
- a module configured to obtain elements $t_i = F_K(tag, i) \in \mathbb{Z}_{p_1}$ for the message *(tag, i)* $\in$ for all integer value *i* from 1 to *n*;
- a module configured to obtain elements $D_{i,p_1} = C_i^{p_2} \cdot g_{p_1}^{-t_i p_2}$ for all integer value *i* from 1 to *n*;
- a module configured to obtain discrete logarithm $x_i \in \mathbb{Z}_N$ of $D_{i,p_1}$ for the base $g_{p_1}^{p_2}$ for all integer value *i* from 1 to *n*;
- a module configured to deliver a plaintext vector x associated to said ciphertext vector $\vec{C}$ corresponding to a vector $\vec{x} = (x_1, \dots, x_n) \in \mathbb{Z}_N^{\,n}$.

In another embodiment, it is proposed an electronic device being able to process at least two ciphertext vectors

$\overrightarrow{C_1}$ and $\overrightarrow{C_2}$, each ciphertext vector being of dimension $n \geq 1$, $\overrightarrow{C_1} = (C_1^{(1)}, \ldots, C_n^{(1)}) \in \mathbb{G}^n$ and $\overrightarrow{C_2} = (C_1^{(2)}, \ldots, C_n^{(2)}) \in \mathbb{G}^n$, where $\mathbb{G}$ is a group being a component of a bilinear group $(\mathbb{G}, \mathbb{G}_T)$ of order $N$. Such electronic device is remarkable in that it comprises:

- a module configured to obtain a binary random data, $tag \in \{0,1\}^*$, being a tag associated to both plaintext vectors associated to said ciphertext vectors $\overrightarrow{C_1}$ and $\overrightarrow{C_2}$;
- a module configured to obtain elements $D_i = C_i^{(1)}/C_i^{(2)}$ for all integer value $i$ from 1 to $n$;
- a module configured to obtain a value $T = \prod_{i=1}^{n} e(D_i, D_i)$, where $e$ is a bilinear map $e\colon \mathbb{G} \times \mathbb{G} \to \mathbb{G}_T$;
- a module configured to obtain a discrete logarithm $\omega \in \mathbb{Z}$ of $T \in \mathbb{G}_T$ with respect to an obtained base $e(g_{p_1}, g_{p_1})$;
- a module configured to deliver an output that is a function of said discrete logarithm $\omega$.

Brief description of drawings

The above and other aspects of the disclosure will become more apparent by the following detailed description of exemplary embodiments thereof with reference to the attached drawings in which:

- Figure 1 presents a key generation method that enables an electronic device to instantiate parameters that are needed to perform either an encryption method, or a decryption method or an evaluation method according to one embodiment of the invention;
- Figure 2 presents a ciphering (or encrypting) method that enables an electronic device to encrypt a vector using the parameters generated by the method of Figure 1;
- Figure 3 presents a deciphering (or decrypting) method that enables an electronic device to obtain a plaintext vector from an encrypted vector (generated from the method of Figure 2) using the parameters generated by the method of Figure 1;
- Figure 4 presents an evaluation method that enables an electronic device to obtain information based on the processing of at least two ciphertexts (obtained via the method of Figure 2),;
- Figure 5 presents a device that can be used to perform one or several steps of methods disclosed in the present document.

Detailed description

It should be noticed that that the concrete pairing-based construction of property-preserving symmetric encryption in the article entitled *"Property Preserving Symmetric Encryption"* can be seen as a modification of the Boneh-Goh-Nissim (BGN) homomorphic encryption scheme (see the article entitled *"Evaluating 2-DNF formulas on ciphertexts"* by D. Boneh et al., published in the proceedings of the conference TCC 05). However, the technique described in the article entitled *"Property Preserving Symmetric Encryption"* allows encrypting vectors in such a way that anyone can publicly test whether two encrypted vectors are orthogonal without learning any further information. Therefore, it is needed to modify this technique since, although it is also needed to evaluate an inner product, it is a goal of at least one embodiment of the invention to enable the computing of distances rather than testing orthogonality. The proposed technique relies on the following modifications:

First of all, it is necessary to remove one randomization layer from the techniques of the article entitled *"Property Preserving Symmetric Encryption"* in order to make it additively homomorphic: this will make it possible to publicly compute an encryption of the difference of vectors $\overrightarrow{x_1} - \overrightarrow{x_2}$ given two ciphertexts $C^{(1)}$ and $C^{(2)}$ that encrypt $\overrightarrow{x_1}$ and $\overrightarrow{x_2}$, respectively. Given an encryption $D$ of $\overrightarrow{x_1} - \overrightarrow{x_2}$, we can then apply a second type of homomorphic operation - reminiscent of the BGN cryptosystem- in order to obtain an encryption of the inner product $\langle \overrightarrow{x_1} - \overrightarrow{x_2}, \overrightarrow{x_1} - \overrightarrow{x_2} \rangle$. By carefully choosing the distribution of private keys SK , we can ensure that all involved random coins cancel out during the latter BGN-type homomorphic operation in such a way that the squared Euclidean distance $\langle \overrightarrow{x_1} - \overrightarrow{x_2}, \overrightarrow{x_1} - \overrightarrow{x_2} \rangle$ becomes publicly computable.

The aforementioned goals can be reached by encrypting $\overrightarrow{x} = (x_1, \ldots, x_n)$ as $C = (C_1, \ldots, C_n)$, where $C_i = g_{p_1}^{x_i} \cdot g_{p_2}^{\delta \cdot s_i}$ for each $i$, where $g_{p_1} \in \mathbb{G}_{p_1}$ and $g_{p_2} \in \mathbb{G}_{p_2}$ are part of the secret key $SK$, $\delta \in_R \mathbb{Z}_{p_2}$ is a random value associated with the entire vector and $(s_1, \ldots, s_n) \in \mathbb{Z}_{p_2}^n$ are part of $SK$ and satisfy $\sum_i s_i^2 = 0 \bmod p_2$ . One issue is that this construction betrays the norm of the vector $\overrightarrow{x}$. Fortunately, this difficulty can be addressed by blinding each $x_i$ using

position specific values and actually encrypt a perturbed vector $(x_1 + t_1, \ldots, x_n + t_n)$, where $\{t_i\}_{i=1}^n$ are pseudorandom values. Each $t_i$ is obtained by applying a pseudorandom function $F_K(.)$ to the tag *tag* (which identifies the dataset) and the position $i$ of $x_i$ in the vector. By doing so, the only way to get rid of the $\{t_i\}_{i=1}^n$ is to homomorphically compute the difference between $\vec{x}$ and another vector $\vec{x}'$ encrypted using the same pseudorandom values $\{t_i\}_{i=1}^n$.

In the following, one embodiment of the invention is proposed that is a modification of the technique described in the article entitled "*Property Preserving Symmetric Encryption*".

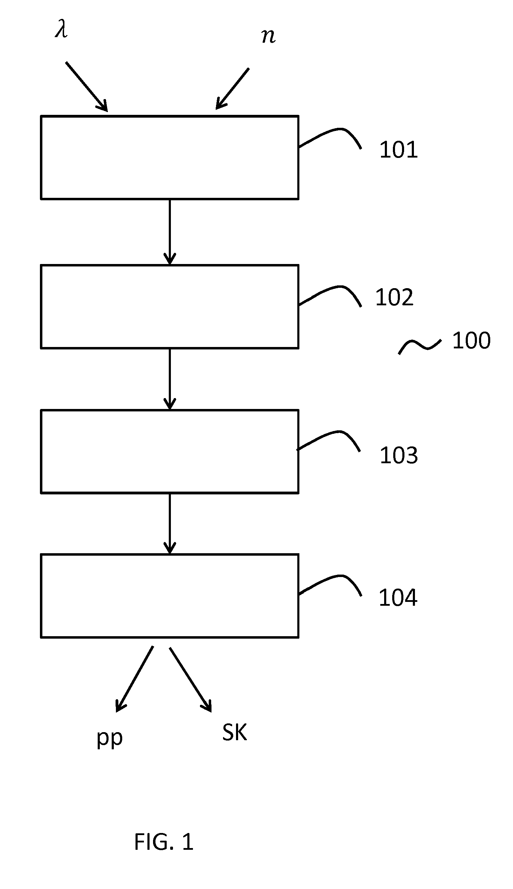

The figure 1 presents a key generation method that enables an electronic device to instantiate parameters that are needed to perform either an encryption method, or a decryption method or an evaluation method according to one embodiment of the invention.

The key generation method, which can be executed by an electronic device, referenced 100, takes as input a security parameter $\lambda$ (that corresponds to a length in bits) and an integer $n \geq 1$ defining the number of coordinates of the vectors to be processed (in either the encryption, decryption and evaluation methods described later).

In a step referenced 101, the electronic device obtains (or selects or chooses) groups $(\mathbb{G}, \mathbb{G}_T)$ of composite order $N = p_1 p_2$, where $p_1, p_2$ are prime numbers that fulfills the following requirement $p_1, p_2 > 2^{l(\lambda)}$ for some integer-valued function $l(\lambda)$, with a bilinear map $e \colon \mathbb{G} \times \mathbb{G} \to \mathbb{G}_T$. Then, the electronic device instantiates the mathematical structures $\mathbb{G}_{p_1}$, $\mathbb{G}_{p_2} \subset \mathbb{G}$ which are respectively the subgroups of order $p_1$ and $p_2$. In one embodiment, $\lambda = 112$, and $l(\lambda) = 1024$.

Then, in a step referenced 102, the electronic device obtains (or generates) random elements that belong to the groups $\mathbb{G}_{p_1}$ and $\mathbb{G}_{p_2}$ : $g_{p_1} \in_R \mathbb{G}_{p_1}$ and $g_{p_2} \in_R \mathbb{G}_{p_2}$ (where the notation $A \in_R B$ means that the element $A$ is randomly obtained and belongs to the mathematical structure $B$).

In a step referenced 103, the electronic device obtains random integers $s_1, \ldots, s_n \in_R \mathbb{Z}_{p_2}^n$ subject to the constraint $\sum_{i=1}^n s_i^2 = 0 \bmod p_2$. It should be noted that this constraint is easy to satisfy. For example, we can proceed as in the article entitled "*Property Preserving Symmetric Encryption*" to obtain the set of $n - 1$ integers $\{s_i\}_{i=1}^{n-1}$ such that $\sum_{i=1}^{n-1} s_i^2$ is itself a square modulo $p_2$. By choosing $p_2 \equiv 1 \pmod 4$, it is known that -1 is also a square in $\mathbb{Z}_{p_2}^*$, so that it can easily be found an integer $s_n$ in $\mathbb{Z}_{p_2}^*$ such that the requirement $\sum_{i=1}^n s_i^2 = 0 \bmod p_2$ is fulfilled.

In a step referenced 104, the electronic device obtains (or selects) a pseudorandom function $F \colon \mathcal{K} \times \mathcal{M} \to \mathbb{Z}_{p_1}$ with key space $K$ and message space $M = \{0,1\}^* \times \{1,\ldots, n\}$. Then, it chooses (determines) a secret key $K \xleftarrow{R} \mathcal{K}$, which allows defining a function $F_K(.)$ that maps each pair (*tag, i*) $\in M$ to a pseudo-random value $F_K(tag, i) \in \mathbb{Z}_{p_1}$ (it should be noted that the notation $A \xleftarrow{R} B$ means that the element $A$ is chosen randomly in the mathematical structure $B$).

The electronic device then outputs the public parameters corresponding to the vector *pp* defined as follows: $pp = ((\mathbb{G}, \mathbb{G}_T), N, e(g_{p_1}, g_{p_2}))$, and the secret key *SK* corresponding to the following vector : $SK = (p_1, p_2, g_{p_1}, g_{p_2}, \{s_i\}_{i=1}^n, K)$.

In one embodiment of the invention, the function $F_K(.)$ is based on the use of a cryptographically secure pseudo-random number generator, such as the Fortuna algorithm (described for example in the Chapter 9 of the book "Cryptography Engineering" by Niels Ferguson, Bruce Schneier, and Tadayoshi Kohno, published by John Wiley & Sons (2010), or the Yarrow algorithm, or a cryptographically secure pseudorandom number generator defined in ANSI X9.17 standard or FIPS 186-2 standard or NIST SP 800-90A standard.

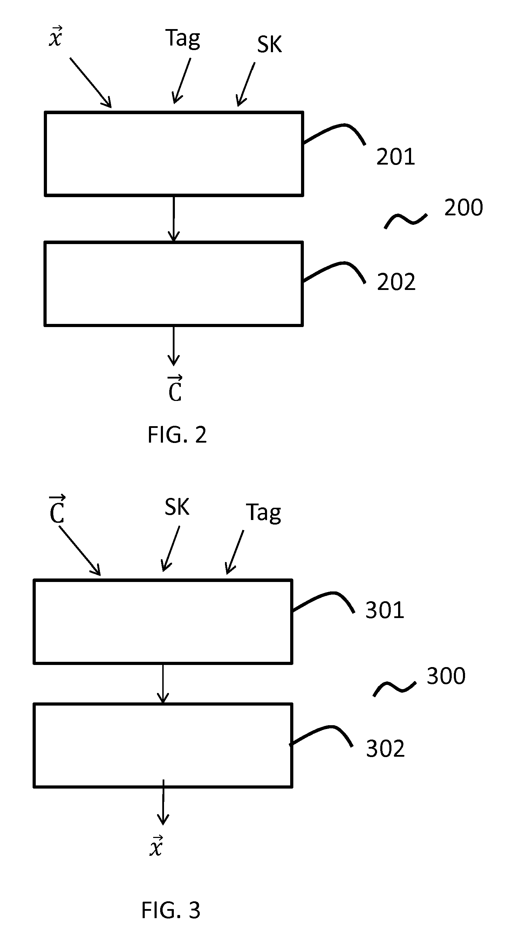

Figure 2 presents a ciphering (or encrypting) method that enables an electronic device to encrypt a vector using the parameters generated by the method of Figure 1.

In order to encrypt a vector $\vec{x} = (x_1, \ldots, x_n) \in \mathbb{Z}_N^n$ with respect to a dataset identifier *tag* $\in \{0,1\}^*$ using the secret key $SK = (p_1, p_2, g_{p_1}, g_{p_2}, \{s_i\}_{i=1}^n, K)$, the electronic device executes a ciphering method referenced 200 that comprises the following steps:

In a step referenced 201, it obtains (or determines, or computes), for $i = 1$ to $n$, the elements

$t_i = F_K(tag, i) \in \mathbb{Z}_{p_1}$ using the pseudo-random function $F_K(.)$ for the message $(tag, i) \in \mathcal{M}$ where $M = \{0,1\}^* \times \{1, ..., n\}$.

In a step referenced 202, it then obtains (or determines, or computes) for $i$ = 1 to $n$, the elements $C_i = g_{p_1}^{x_i + t_i} \cdot g_{p_2}^{\delta . s_i}$, where the element $\delta$ is chosen randomly in the group $\mathbb{Z}_{p_1}$, and is used to encrypt the whole vector $\vec{x} = (x_1, ..., x_n)$

The electronic device then outputs the ciphertext C corresponding to the vector $\vec{C} = (C_1, ..., C_n) \in \mathbb{G}^n$.

Figure 3 presents a deciphering (or decrypting) method that enables an electronic device to obtain a plaintext vector from an encrypted vector (generated from the method of Figure 2) using the parameters generated by the method of Figure 1.

In order to decrypt a ciphertext *C* corresponding to the vector $\vec{C} = (C_1, ..., C_n) \in \mathbb{G}^n$, the electronic device executes a deciphering (or decrypting) method, referenced 300, that first checks the format of the ciphertext vector $\vec{C}$ to be processed. Indeed, it is checked that each of the coordinates of the ciphertext belongs to the group $\mathbb{G}$. In the case that at least one coordinate does not belong to the group $\mathbb{G}$, the electronic device then raises a security exception. Then, the secret key *SK* is obtained in order to execute the next steps.

In a step referenced 301, the electronic device determines (or computes), for $i$ = 1 to $n$, the elements $t_i = F_K(tag, i) \in \mathbb{Z}_{p_1}$ and $D_{i,p_1} = C_i^{p_2} \cdot g_{p_1}^{-t_i p_2}$, which equals to $D_{i,p_1} = g_{p_1}^{x_i p_2}$.

Then, in a step referenced 302, the discrete logarithm $x_i \in \mathbb{Z}_N$ of $D_{i,p_1}$ for the base $g_{p_1}^{p_2}$ is determined (recall that this can be done efficiently when the coordinate $x_i$ lives in an interval of polynomial size). Such step 302 can use for example techniques described in the article entitled "Computing Small discrete logarithms faster", by D.-J. Bernstein et al., published on Report 2012/458 on the website of the Cryptology Eprint Archive.

The electronic device then outputs the vector $\vec{x} = (x_1, ..., x_n) \in \mathbb{Z}_N^n$.

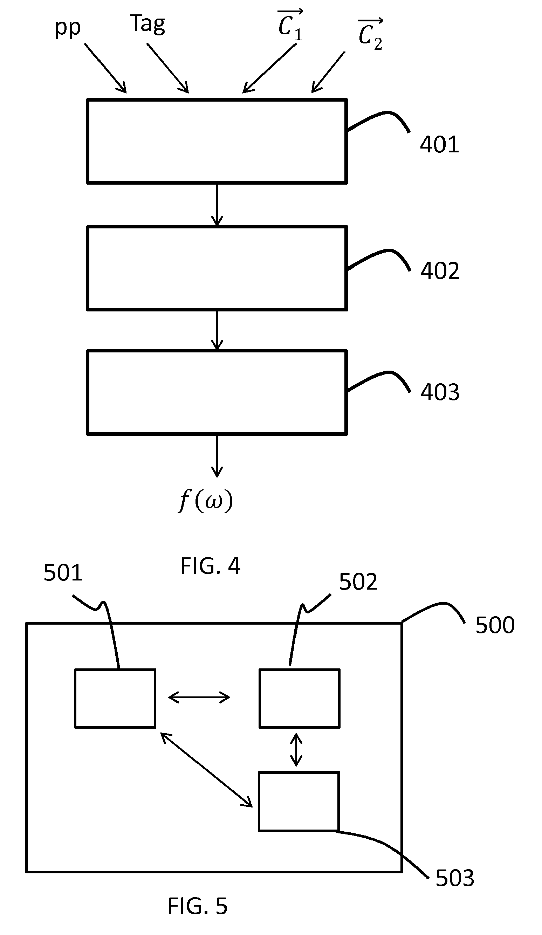

Figure 4 presents an evaluation method that enables an electronic device to obtain information based on the processing of at least two ciphertexts (obtained via the method of Figure 2), such processing involving only public parameters, and does not leak information on the plaintexts that were ciphered.

More precisely, the electronic device obtains public parameters *pp* (as the one outputted by the method (or process) described in the Figure 1), a particular tag, and at least two ciphertexts $\vec{C_1} = (C_1^{(1)}, ..., C_n^{(1)}) \in \mathbb{G}^n$, and $\vec{C_2} = (C_1^{(2)}, ..., C_n^{(2)}) \in \mathbb{G}^n$, obtained through the process/method depicted in the Figure 2.

The electronic device then, in a step referenced 401, determines (or computes) the elements $D_i = C_i^{(1)} / C_i^{(2)}$, which equals to $D_i = g_{p_1}^{x_i^{(1)} - x_i^{(2)}} \cdot g_{p_2}^{(\delta_1 - \delta_2).s_i}$ some $\delta_1, \delta_2 \in \mathbb{Z}_{p_2}$. Hence, the step 401 comprises in one embodiment the use of an inversion unit and of a multiplication unit in order to speed up the computations.

Then, in a step referenced 402, the electronic device obtains (or determines) the value of $T = \prod_{i=1}^n e(D_i, D_i) = e(g_{p_1}, g_{p_1})^{\sum_{i=1}^n (x_i^{(1)} - x_i^{(2)})^2}$ .

At last, in a step referenced 403, the electronic device obtains the discrete logarithm $\omega \in \mathbb{Z}$ of $T \in \mathbb{G}_T$ with respect to the base $e(g_{p_1}, g_{p_1})$ (which is possible as long as $\omega$ lives in an interval of polynomial size) and it determines the square root of $\omega$, noted $\sqrt{\omega}$, which is computed over the real numbers. In that case, the electronic device outputs the value of $\sum_{i=1}^n x_i^{(1)} - x_i^{(2)}$ .

Hence, in the case that a telecommunication operator encrypts the GPS coordinates of all its subscribers before sending the resulting ciphertexts to another party (an electronic device) to whom it delegates the maintenance of the infrastructure, it is possible for such party that does not share a private key to test the geographic proximity of different electronic devices (such as a mobile phone) suffering from limited Internet connectivity or other technical problems.

The set of the previous mentioned processes / methods in Figures 1 to 4 defines a Computable Distance Symmetric Encryption (or CDSE) which has a formal definition that is inspired by the definition 2.1 of the article _"Property Preserving Symmetric Encryption"_.

Hence, the CDSE scheme is a secret-key encryption scheme endowed with an additional algorithm "Evaluate" (which is the evaluation method depicted in Figure 4) that allows publicly computing the Euclidean distance between two encrypted vectors without learning anything else.

The primitive is motivated by privacy-preserving data mining applications where it is desirable to test the proximity of users whose exact location should remain private as explained in Background section of the present document.

To show the correctness of the scheme (and especially the evaluation process/method depicted in Figure 4), it should be noted that the equality $D_i = g_{p_1}^{x_i^{(1)} - x_i^{(2)}} \cdot g_{p_2}^{(\delta_1 - \delta_2) . s_i}$ holds whenever $C^{(1)}$ and $C^{(2)}$ are encrypted for the same tag in this case, the values of $t_i = F_K(tag, i)$ are identical in both ciphertexts. In contrast, if $\overrightarrow{C_1}$ and $\overrightarrow{C_2}$ correspond to different datasets (and thus different tags), $D_i$ is of the form $D_i = g_{p_1}^{x_i^{(1)} - x_i^{(2)} + (t_i - t_i')} \cdot g_{p_2}^{(\delta_1 - \delta_2) . s_i}$, where $(t_i - t_i')$ serves as a blinding term which prevents from properly evaluating the distance.

It should also be noted that the equality $T = \prod_{i=1}^{n} e(D_i, D_i) = e(g_{p_1}, g_{p_1})^{\sum_{i=1}^{n}(x_i^{(1)} - x_i^{(2)})^2}$ holds because:

(i) $e(g_{p_1}, g_{p_2}) = e(g_{p_2}, g_{p_1}) = 1_{\mathbb{G}_T}$ due to the orthogonality properties of the bilinear map in composite order groups;

(ii) The constraint $\sum_{i=1}^{n} s_i^2 = 0 \mod p_2$ allows cancelling the term $e(g_{p_2}, g_{p_2})^{(\delta_1 - \delta_2)^2 . \sum_{i=1}^{n} s_i^2}$. Specifically, we have $T = \prod_{i=1}^{n} e(D_i, D_i) =$

$$e(g_{p_1}, g_{p_1})^{\sum_{i=1}^{n}(x_i^{(1)} - x_i^{(2)})^2} . e(g_{p_2}, g_{p_2})^{(\delta_1 - \delta_2)^2 . \sum_{i=1}^{n} s_i^2} = e(g_{p_1}, g_{p_1})^{\sum_{i=1}^{n}(x_i^{(1)} - x_i^{(2)})^2}.$$

It is worth noting that, although the dataset identifier tag is included among the inputs of the evaluation algorithm, this identifier is not actually needed to compute distances. If the evaluator accidentally attempts to compute distances between vectors from different datasets, he can detect that the two ciphertexts encrypt vectors labeled with different tags when realizing his inability to resolve the discrete logarithm instance $\omega = \log_{e(g_{p_1}, g_{p_1})}(T)$ within a reasonably short time: when $\overrightarrow{C_1}$ and $\overrightarrow{C_2}$ correspond to different tags, each $D_i$ is affected by a term $(t_i - t_i') \mod p_1$ whose distribution is computationally indistinguishable from the uniform distribution over $\mathbb{Z}_{p_1}$. In this case, the discrete logarithm of $T$ is unlikely to fall into the desired small interval. Hence, after a pre-determined time bound, the evaluator can just halt and output $\perp$ if he has not managed to find the correct $\omega$. The scheme can thus be applied in situations where the tag is itself a private piece of information. Intuitively, the tag serves as a data set identifier and we only want to be able to compute pairwise distances between vectors from the same dataset. In a variant, tags are also encrypted. A desirable property then is that the algorithm is able to detect that tags for $\overrightarrow{C_1}$ and $\overrightarrow{C_2}$ are different, while inferring nothing about the tags or the locations. In one embodiment, such tag has the size of a register comprised in an electronic device. Hence, in one embodiment, such tag has a size of 16 bits, or 32 bits, or 64 bits.

Finally, it can be noticed that, like the protocol described in the article "Three Protocols for Location Privacy" by G. Zhong et al., published in the proceedings of the conference PET 2007, that the scheme can easily be adapted so as to enable the computation of grid cell distances, instead of exact distances. Namely, instead of encrypting exact locations, the electronic device that performs the encryption chooses a cell length $r$ and actually encrypts a vector $\vec{x} = (x_1, ..., x_n)$ as $\vec{X} = (\lfloor x_1/r \rfloor, ..., \lfloor x_n/r \rfloor)$, which amounts to encrypting the grid cell in which the position $(x_1, ..., x_n)$ is located. Instead of exactly learning how far apart two vectors are, the evaluator (i.e. the electronic device that executes the method presented in Figure 4) can only estimate the number of cells between them. Since users do not reveal their specific position in their grid cell, this method allows reducing the amount of information that an evaluator can infer about exact locations.

It should be noted that the evaluation process enables one to obtain a distance between two vectors $\overrightarrow{x_1} = (x_1^{(1)}, ..., x_n^{(1)})$ and $\overrightarrow{x_2} = (x_1^{(2)}, ..., x_n^{(2)})$ without manipulating directly these vectors $\overrightarrow{x_1}$ and $\overrightarrow{x_2}$, but by processing the corresponding ciphertexts $\overrightarrow{C_1} = (C_1^{(1)}, ..., C_n^{(1)}) \in \mathbb{G}^n$, and $\overrightarrow{C_2} = (C_1^{(2)}, ..., C_n^{(2)}) \in \mathbb{G}^n$, which are respectively the ciphertext of the vectors $\overrightarrow{x_1}$ and $\overrightarrow{x_2}$. Such processing on the ciphertexts does not involve the use of a secret key, and only necessitates the use of public parameters and a tag. More precisely, to evaluate distances when its input ciphertexts $C^{(1)}$ and $C^{(2)}$ were encrypted for the same tag.

We also stress that two encryptions $\overrightarrow{C_1}$ and $\overrightarrow{C'_1}$ of a same vector $\overrightarrow{x_1}$ are different bit-by-bit as the encryption algorithm is probabilistic. The only way to detect that two ciphertexts $\overrightarrow{C_1}$ and $\overrightarrow{C'_1}$ encrypt the same vector $\overrightarrow{x_1}$ is to recognize that the distance between the two vectors is zero, by using the public evaluation method of Figure 4.

We also note that the scheme requires the coordinates of vectors $\overrightarrow{x}$ to be relatively small (much smaller than the exponential-size group order $p_1$) in order to enable efficient decryption and evaluation. In the case of GPS coordinates, for example, this seems like a very plausible assumption: it is quite natural to expect the squared distance $\omega$ to fit within 30 bits (the Earth circumference being about $2^{25}$ meters), in which case the discrete logarithm computation (see step 403) of the evaluation method is very fast.

Figure 5 presents a device that can be used to perform one or several steps of methods disclosed in the present document.

Such device referenced 500 comprises a computing unit (for example a CPU, for *"Central Processing Unit"),* referenced 501, and one or several memory units (for example a RAM (for *"Random Access Memory")* block in which intermediate results can be stored temporarily during the execution of instructions a computer program, or a ROM block in which, among other things, computer programs are stored, or an EEPROM *("Electrically-Erasable Programmable Read-Only Memory")* block, or a flash block) referenced 502. Computer programs are made of instructions that can be executed by the computing unit. Such device 500 can also comprise a dedicated unit, referenced 503, constituting an input-output interface to allow the device 500 to communicate with other devices. In particular, this dedicated unit 503 can be connected with an antenna (in order to perform communication without contacts), or with serial ports (to carry communications "contact"). Let's remark that the arrows in Figure 5 mean that the linked unit can exchange data through buses for example together.

In an alternative embodiment, some or all of the steps of the method previously described, can be implemented in hardware in a programmable FPGA *("Field Programmable Gate Array")* component or ASIC *("Application-Specific Integrated Circuit")* component. Hence, in one embodiment, means for obtaining and/or means for delivering can be dedicated circuit that can achieve the intended goal (i.e. obtaining and/or delivering).

In an alternative embodiment, some or all of the steps of the method previously described, can be executed on an electronic device comprising memory units and processing units as the one disclosed in Figure 5.

## Claims

1. Method for ciphering a plaintext vector $\overrightarrow{x}$ of dimension $n \geq 1$, $\overrightarrow{x} = (x_1, ..., x_n) \in \mathbb{Z}_N^n$, where $N$ is an integer, said method being executed by an electronic device, and being **characterized in that** it comprises:

   - obtaining a binary random data, $tag \in \{0,1\}^*$, being a tag associated with said plaintext vector;
   - obtaining a secret key $SK = (p_1, p_2, g_{p_1}, g_{p_2}, \{s_i\}_{i=1}^n, K)$, where $p_1$, $p_2$ are prime numbers, with $N = p_1 p_2$, $\{s_i\}_{i=1}^n$ is a set of random integers $s_1, ..., s_n \in \mathbb{Z}_{p_2}$ subject to the constraint $\sum_{i=1}^n s_i^2 = 0 \bmod p_2$, $g_{p_1}$ is a random element that belongs to a group $\mathbb{G}_{p_1}$ having an order $p_1$, $g_{p_2}$ is a random element that belongs to a group $\mathbb{G}_{p_2}$ having an order $p_2$, and K is a secret key which defines a pseudo-random function $F_K(.)$ defined over a message space $M = \{0,1\}^* \times \{1, ..., n\}$;
   - obtaining elements $t_i = F_K(tag, i) \in \mathbb{Z}_{p_1}$ with $(tag, i) \in$ for $M$ all integer values $i$ from 1 to $n$;
   - obtaining an element $\delta$ that is chosen randomly in the group $\mathbb{Z}_{p_1}$;
   - obtaining elements $C_i = g_{p_1}^{x_i+t_i} . g_{p_2}^{\delta.s_i} \in \mathbb{G}$ for all integer values $i$ from 1 to $n$, where G is a group of order $N$;
   - delivering a ciphertext vector $\overrightarrow{C}$ of said plaintext vector $\overrightarrow{x}$ corresponding to a vector $\overrightarrow{C} = (C_1, ..., C_n) \in \mathbb{G}^n$.

2. Method for ciphering according to claim 1, **characterized in that** the components $x_1, ..., x_n$ of said plaintext vector correspond to geographic information.

3. Method for ciphering according to claim 2, **characterized in that** said dimension $n$ is equal to two, and **in that** said

components $x_1, x_2$ correspond respectively to a latitude and a longitude related information that are mapped onto $\mathbb{Z}_N$.

4.  Method for ciphering according to claim 2, **characterized in that** said dimension $n$ is equal to three, and **in that** said components $x_1$, $x_2$, $x_3$ correspond respectively to a latitude, a longitude and an altitude related information that are mapped onto $\mathbb{Z}_N$.

5.  Method for ciphering according to any claims 1 to 4, **characterized in that** said pseudo-random function $F_K(.)$ is based on a cryptographically secure pseudo-random number generator.

6.  Method for ciphering according to claim 5, **characterized in that** said cryptographically secure pseudorandom number generator is one element belonging to a list comprising:

    - Fortuna algorithm;
    - Yarrow algorithm;
    - cryptographically secure pseudorandom number generator defined in ANSI X9.17 standard or FIPS 186-2 standard or NIST SP 800-90A standard.

7.  Method for ciphering according to any claims 1 to 6, **characterized in that** said binary random data *tag* has a size of 32 bits.

8.  Method for ciphering according to any claims 1 to 6, **characterized in that** said binary random data *tag* has a size of 64 bits.

9.  Method for ciphering according to any claims 1 to 8, **characterized in that** said prime number $p_2$ verifies a congruence relationship $p_2 \equiv 1 \pmod 4$.

10. Method for deciphering a ciphertext vector $\vec{C}$ of dimension $n \geq 1$, $\vec{C} = (C_1, \ldots, C_n) \in$ $\mathbb{G}^n$, where $\mathbb{G}$ is a group of order $N$, said method being executed by an electronic device, and being **characterized in that** it comprises:

    - obtaining binary random data, *tag* $\in \{0,1\}^*$, being a tag associated with a plaintext vector associated with said ciphertext vector $\vec{C}$;
    - obtaining a part of a secret key *SK*, said part comprising elements *($p_2$, $g_{p_1}$, K)*, where $p_2$ is a prime number, $g_{p1}$ is a random element that belongs to a group $\mathbb{G}_{p_1}$ having an order $p_1$, where $p_1$ is a prime number, and K is a secret key which defines a pseudo-random function $F_K(.)$ defined over a message space $M = \{0,1\}^* \times \{1, \ldots, n\}$;
    - obtaining elements $t_i = F_K(tag, i) \in \mathbb{Z}_{p_1}$ for the message $(tag, i) \in$ for all integer values $i$ from 1 to $n$;
    - obtaining elements $D_{i,p_1} = C_i^{p_2} . g_{p_1}^{-t_i p_2}$ for all integer values $i$ from 1 to $n$;
    - obtaining discrete logarithm $x_i \in \mathbb{Z}_N$ of $D_{i,p1}$ for the base $g_{p_1}^{p_2}$ for all integer values $i$ from 1 to $n$;
    - delivering a plaintext vector $\vec{x}$ associated with said ciphertext vector $\vec{C}$ corresponding to a vector $\vec{x} = (x_1, \ldots, x_n) \in \mathbb{Z}_N{}^n$.

11. Method for deciphering according to claim 10, **characterized in that** the components $x_1$, ..., $x_n$ of said plaintext vector correspond to geographic information.

12. Method for processing at least two ciphertext vectors $\overrightarrow{C_1}$ and $\overrightarrow{C_2}$, each ciphertext vector being of dimension $n \geq 1$, $\overrightarrow{C_1} = (C_1^{(1)}, \ldots, C_n^{(1)}) \in \mathbb{G}^n$ and $\overrightarrow{C_2} = (C_1^{(2)}, \ldots, C_n^{(2)}) \in \mathbb{G}^n$, where $\mathbb{G}$ is a group being a component of a bilinear group $(\mathbb{G}, \mathbb{G}_T)$ of order $N$, the method being executed by an electronic device, and being **characterized in that** it comprises:

- obtaining a binary random data, $tag \in \{0,1\}^*$, being a tag associated with both plaintext vectors associated with said ciphertext vectors $\overrightarrow{C_1}$ and $\overrightarrow{C_2}$;

- obtaining elements $D_i = C_i^{(1)}/C_i^{(2)}$ for all integer values i from 1 to $n$;

- obtaining a value $T = \prod_{i=1}^{n} e(D_i, D_i)$, where $e$ is a bilinear map $e: \mathbb{G} \times \mathbb{G} \to \mathbb{G}_T$;

- obtaining a discrete logarithm $\omega \in \mathbb{Z}$ of $T \in \mathbb{G}_T$ with respect to an obtained base $e(g_{p_1}, g_{p_1})$;

- delivering an output that is a function of said discrete logarithm $\omega$.

13. Method for processing according to claim 12, **characterized in that** said output corresponds to an Euclidian distance between at least two plaintext vectors associated with said at least two ciphertext vectors.

14. Method for processing according to claim 13, **characterized in that** said at least two plaintext vectors correspond to geographic information.

15. Method for processing according to claim 13, **characterized in that** said at least two plaintext vectors correspond to images fingerprint information.

16. Method for processing according to claim 15, **characterized in that** said method is implemented in a collaborative filtering system.

17. A computer-readable and non-transient storage medium storing a computer program comprising a set of computer-executable instructions to implement a method for cryptographic computations when the instructions are executed by a computer, wherein the instructions comprise instructions, which when executed, configure the computer to perform ciphering method according to claims 1 to 9, and/or to perform a deciphering method according to claims 10 to 11, and/or to perform a processing method according to claims 12 to 16.

18. Electronic device configured to cipher a plaintext vector $\overleftrightarrow{x}$ of dimension $n \geq 1$, $\vec{x} = (x_1, \ldots, x_n) \in \mathbb{Z}_N^n$, where $N$ is an integer, and being **characterized in that** it comprises:

- means for obtaining a binary random data, $tag \in \{0,1\}^*$, being a tag associated with said plaintext vector;
- means for obtaining a secret key $SK = (p_1, p_2, g_{p_1}, g_{p_2}, \{s_i\}_{i=1}^{n}, K)$, where $p_1, p_2$ are prime numbers, with $N = p_1 p_2$, $\{s_i\}_{i=1}^{n}$ is a set of random integers $s_1, \ldots, s_n \in \mathbb{Z}_{p_2}^n$ subject to the constraint $\sum_{i=1}^{n} s_i^2 = 0 \bmod p_2$, $g_{p_1}$ is a random element that belongs to a group $\mathbb{G}_{p_1}$ having an order $p_1$, $g_{p_2}$ is a random element that belongs to a group $\mathbb{G}_{p_2}$ having an order $p_2$, and K is a secret key which defines a pseudo-random function $F_K(.)$ defined over a message space $M = \{0,1\}^* \times \{1, \ldots, n\}$;
- means for obtaining elements $t_i = F_K(tag, i) \in \mathbb{Z}_{p_1}$ with $(tag, i) \in M$ for all integer values $i$ from 1 to $n$;
- means for obtaining an element $\delta$ that is chosen randomly in the group $\mathbb{Z}_{p_1}$;
- means for obtaining elements $C_i = g_{p_1}^{x_i + t_i} \cdot g_{p_2}^{\delta . s_i} \in \mathbb{G}$ for all integer values $i$ from 1 to $n$, where $\mathbb{G}$ is a group of order $N$;
- means for delivering a ciphertext vector $\vec{C}$ of said plaintext vector $\vec{x}$ corresponding to a vector $\vec{C} = (C_1, \ldots, C_n) \in \mathbb{G}^n$.

19. Electronic device configured to decipher a ciphertext vector $\vec{C}$ of dimension $n \geq 1$, $\vec{C} = (C_1, \ldots, C_n) \in \mathbb{G}^n$, where $\mathbb{G}$ is a group of order $N$, and being **characterized in that** it comprises:

- means for obtaining a binary random data, $tag \in \{0,1\}^*$, being a tag associated with a plaintext vector associated to said ciphertext vector $\vec{C}$;
- means for obtaining a part of a secret key SK, said part comprising elements ($p_2$, $gp_1$, K), where $p_2$ is a prime

13

number, $g_{p_1}$ is a random element that belongs to a group $\mathbb{G}_{p_1}$ having an order $p_1$, where $p_1$ is a prime number, and K is a secret key which defines a pseudo-random function $F_K(.)$ defined over a message space $M = \{0,1\}^* \times \{1, ..., n\}$;

- means for obtaining elements $t_i = F_K(tag, i) \in \mathbb{Z}_{p_1}$ for the message *(tag, i)* ∈ for all integer values *i* from 1 to *n*;

- means for obtaining elements $D_{i,p_1} = C_i^{p_2} . g_{p_1}^{-t_i p_2}$ for all integer values *i* from 1 to *n*;

- means for obtaining discrete logarithm $x_i \in \mathbb{Z}_N$ of $D_{i,p_1}$ for the base $g_{p_1}^{p_2}$ for all integer values *i* from 1 to *n*;

- means for delivering a plaintext vector $\vec{x}$ associated to said ciphertext vector $\vec{C}$ corresponding to a vector $\vec{x} = (x_1, ..., x_n) \in \mathbb{Z}_N^n$.

**20.** Electronic device being able to process at least two ciphertext vectors $\overrightarrow{C_1}$ and $\overrightarrow{C_{12}}$, each ciphertext vector being of dimension $n \geq 1$, $\overrightarrow{C_1} = (C_1^{(1)}, ..., C_n^{(1)}) \in \mathbb{G}^n$ and $\overrightarrow{C_2} = (C_1^{(2)}, ..., C_n^{(2)}) \in \mathbb{G}^n$, where $\mathbb{G}$ is a group being a component of a bilinear group $(\mathbb{G}, \mathbb{G}_T)$ of order *N,* and being **characterized in that** it comprises:

- means for obtaining a binary random data, *tag* ∈ {0,1}*, being a tag associated with both plaintext vectors associated to said ciphertext vectors $\overrightarrow{C_1}$ and $\overrightarrow{C_2}$;

- means for obtaining elements $D_i = C_i^{(1)}/C_i^{(2)}$ for all integer values *i* from 1 to *n*;

- means for obtaining a value $T = \prod_{i=1}^n e(D_i, D_i)$, where *e* is a bilinear map $e: \mathbb{G} \times \mathbb{G} \to \mathbb{G}_T$;

- means for obtaining a discrete logarithm $\omega \in \mathbb{Z}$ of T ∈ $\mathbb{G}_T$ with respect to an obtained base e($g_{p_1}, g_{p_1}$);

- means for delivering an output that is a function of said discrete logarithm $\omega$.

$\lambda$     $n$

101

102

100

103

104

pp     SK

FIG. 1

FIG. 2

FIG. 3

pp    Tag    $\vec{C_1}$    $\vec{C_2}$

401

402

403

$f(\omega)$

FIG. 4

501    502    500

503

FIG. 5

Europäisches
Patentamt

European
Patent Office

Office européen
des brevets

# EUROPEAN SEARCH REPORT

Application Number

EP 14 30 6547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SANJIT CHATTERJEE ET AL: "Property Preserving Symmetric Encryption Revisited", INTERNATIONAL ASSOCIATION FOR CRYPTOLOGIC RESEARCH,, vol. 20140101:043417, 1 January 2014 (2014-01-01), pages 1-8, XP061015287, [retrieved on 2014-01-01] * paragraph [0002] - paragraph [0004] * | 1-20 | INV. H04L9/00 H04L9/30 |
| Y,D | OMKANT PANDEY ET AL: "Property Preserving Symmetric Encryption", 15 April 2012 (2012-04-15), ADVANCES IN CRYPTOLOGY EUROCRYPT 2012, SPRINGER BERLIN HEIDELBERG, BERLIN, HEIDELBERG, PAGE(S) 375 - 391, XP019175405, ISBN: 978-3-642-29010-7 * paragraph [0004] * | 1-20 | |
| A,D | Arvind Narayanan ET AL: "Location Privacy via Private Proximity Testing", NDSS 2011, San Diego, USA, 6 February 2011 (2011-02-06), pages 1-17, XP055124113, Retrieved from the Internet: URL:http://www.isoc.org/isoc/conferences/ndss/11/pdf/1_3.pdf [retrieved on 2014-06-18] * paragraph [0003] * | 1-20 | TECHNICAL FIELDS SEARCHED (IPC) H04L |

-/--

The present search report has been drawn up for all claims

| Place of search | Date of completion of the search | Examiner |
|---|---|---|
| Munich | 24 April 2015 | Bec, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 30 6547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JANUS DAM NIELSEN ET AL: "Location privacy via actively secure private proximity testing", PERVASIVE COMPUTING AND COMMUNICATIONS WORKSHOPS (PERCOM WORKSHOPS), 2012 IEEE INTERNATIONAL CONFERENCE ON, IEEE, 19 March 2012 (2012-03-19), pages 381-386, XP032179988, DOI: 10.1109/PERCOMW.2012.6197514 ISBN: 978-1-4673-0905-9 * paragraph [00IV] *  ----- | 1-20 | |

**TECHNICAL FIELDS SEARCHED (IPC)**

The present search report has been drawn up for all claims

| Place of search | Date of completion of the search | Examiner |
|---|---|---|
| Munich | 24 April 2015 | Bec, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. NARAYANAN et al.** Location Privacy via Private Proximity Testing. *proceedings of the conference NDSS,* 2011
- **O. PANDEY et al.** Property Preserving Symmetric Encryption. *proceedings of the conference Eurocrypt,* 2010
- **V. FOTOPOULOS ; A.N. SKODRAS.** *A New Fingerprinting method for digital images*
- **Y. BACHRACH ; R. HERBRICH.** *Fingerprinting Ratings For Collaborative Filtering - Theoretical and Empirical Analysis*
- **NIELS FERGUSON ; BRUCE SCHNEIER ; TADAYOSHI KOHNO.** Cryptography Engineering. John Wiley & Sons, 2010
- **D.-J. BERNSTEIN et al.** *Computing Small discrete logarithms faster,* 2012
- **G. ZHONG et al.** Three Protocols for Location Privacy. *proceedings of the conference PET,* 2007